# EUROPÄISCHE PATENTSCHRIFT

(11) **EP 2 804 169 B1**
(45) Veröffentlichungstag und Bekanntmachung des Hinweises auf die Patenterteilung: **20.04.2016**
(21) Anmeldenummer: 13168082.9
(22) Anmeldetag: 16.05.2013
(51) Int. Cl.: G09F 23/00, G09F 3/02, B31D 1/02, G09F 3/10, B32B 38/04, G06K 19/06, G09F 3/00

(54) **Etikett zum Kennzeichnen von Gegenständen und Herstellungsverfahren**
Label for marking articles and production method
Etiquette destinée à caractériser des objets et procédé de fabrication

(43) Veröffentlichungstag der Anmeldung: 19.11.2014
(73) Patentinhaber: S+P Samson GmbH, 86438 Kissing (DE)
(72) Erfinder: Gruber, Franz, 86163 Augsburg (DE); Jelinek, Wolfgang, 86529 Schrobenhausen (DE); Boisson, Michael, 82131 Gauting (DE); Kahlenberg, Udo, 82402 Seeshaupt (DE)
(74) Vertreter: Vossius & Partner Patentanwälte Rechtsanwälte mbB

(56) Entgegenhaltungen:
- WO-A1-01/17766
- WO-A1-90/00788
- WO-A1-02/055295
- WO-A1-2009/095027
- US-A1- 2003 001 381

## Beschreibung

Die vorliegende Erfindung betrifft ein Etikett zum Kennzeichnen von Gegenständen, insbesondere OP-Besteck, ein Bahnenmaterial mit mehreren der Etiketten zum Ablösen von dem Bahnenmaterial, wobei die Etiketten bereits bedruckt sein können oder durch den Endverbraucher später bedruckbar bereitgestellt werden, sowie Verfahren zur Herstellung derartiger Etiketten.

Kliniken oder Praxen, die auch Operationen durchführen, benützen in der Regel einen großen Bestand an Operations (OP) - Besteck, das permanent neu zusammengestellt werden muss. So werden beispielsweise zu jeder spezifischen Operation ganz bestimmte Instrumente zu einem OP-Besteck zusammengestellt und bereits vor der Operation für diese vorbereitet. Oftmals werden auch für ein und denselben Eingriff von verschiedenen Chirurgen unterschiedliche OP-Bestecke gewünscht. Das OP-Besteck für einen bestimmten Eingriff und/oder einen bestimmten Chirurgen wird in der Regel zum Beispiel von einer OP-Schwester zusammengestellt und vorbereitet. Dies erfordert zum einen geschultes Personal, das in der Lage ist, für jeden Fall geeignetes OP-Besteck fehlerfrei vorzubereiten. Zum anderen verursacht das händische Heraussuchen der einzelnen Teile eines OP-Bestecks wegen des damit verbundenen Zeitaufwands zusätzliche Kosten.

Daher besteht ein Bedarf, OP-Besteck bzw. dessen Einzelteile entsprechend zu markieren, so dass mit Hilfe der Markierung für jeden Anlass das gewünschte OP-Besteck entweder automatisch bereitgestellt werden kann oder mit Hilfe einer Checkliste auf einfache Art und Weise händisch zusammengestellt werden kann. Da sich diese Zuordnung im Laufe der Zeit verändern kann, beispielsweise durch sich wandelnde Vorlieben der Chirurgen oder einem Personalwechsel im Chirurgenteam, sollten diese Markierungen auf einfache Weise an OP-Besteck angebracht werden können. Darüber hinaus sollten diese Markierungen dafür geeignet sein, mehrere Sterilisationsprozesse zu überdauern, und die üblichen Anforderungen an medizinische Geräte bestehen.

Die DE 21 2008 000 085 U1 beschreibt ein Markierungssystem zum Markieren zum Beispiel eines medizinischen Instrumentes. Das Markierungssystem umfasst eine Halteeinrichtung für das zu markierende Objekt, ein Markierungselement, eine Bohreinrichtung zum Einbringen einer Aufnahmebohrung für das Markierungselement in das zu markierende Objekt und eine Presseinrichtung zum Einpressen des Markierungselementes in die Bohrung. Das Markierungselement kann beispielsweise aus Polyetheretherketon (PEEK) bestehen, in das beispielsweise ein Barcode oder 2D-Code eingebracht oder eingegossen ist. Die Anbringung eines solchen Markierungselementes ist jedoch ganz offensichtlich mit großem Aufwand verbunden. Ferner lässt sich ein solches Markierungselement nicht ohne dauerhafte Spuren von dem medizinischen Instrument entfernen. Daher ist das in der DE 21 2008 000 085 U1 vorgeschlagene Markierungssystem im Hinblick auf die oben diskutierten Anforderungen nicht geeignet.

Die WO 90/00788 A1 beschreibt ein selbstklebendes Etikett mit einer ersten Schicht aus Polymermaterial, die auf einer Seite bedruckt ist und auf ihrer anderen Seite einen Klebstoff aufweist. Auf der Oberseite der ersten Schicht aus Polymermaterial ist eine transparente zweite Schicht aus Polymermaterial mittels eines Klebemittels, das vorzugsweise ein UV-aktivierbares Klebemittel ist, auflaminiert.

De WO 01/17766 A1 offenbart verschiedene flexible Vorlaminate, die eine Deckschicht mit einem freiliegenden wärmeaktivierbaren Klebstoff und/oder eine Grundschicht mit einem freiliegenden wärmeaktivierbaren Klebstoffschicht aufweisen.

Die WO 02/055295 A1 offenbart ein durch Wärme versiegelbares Laminat mit einer Trägerschicht, auf deren Unterseite eine wärmeaktivierbare erste Klebstoffschicht und auf deren Oberseite eine wärmeaktivierbare zweite Klebstoffschicht vorgesehen ist.

Die WO 2009/085027 A1 und US 2003/0001381 A1 offenbaren jeweils die Herstellung von Etiketten aus Bahnenmaterialien.

Es ist daher eine Aufgabe der vorliegenden Erfindung, ein Etikett zum Kennzeichnen von Gegenständen bereitzustellen, das insbesondere rauen Umgebungsbedingungen genügt, wie sie beispielsweise bei der Sterilisation von OP-Besteck auftreten. Ferner soll eine einfach zu handhabende und herzustellende Möglichkeit geschaffen werden, derartige Etiketten an einen Endverbraucher zu liefern, sie zu lagern und vom Endverbraucher verwendet zu werden. Eine weitere Aufgabe besteht darin, Verfahren zur Herstellung von Etiketten bereitzustellen, die solchen Anforderungen gerecht werden.

Diese und weitere Aufgaben werden durch die in den Patentansprüchen definierten Etiketten, Bahnenmaterialien, Verwendungen und Herstellungsverfahren gelöst. Bevorzugte Ausführungsformen sind jeweils in den abhängigen Ansprüchen beschrieben.

Die Erfindung betrifft unter anderem ein Etikett zum Kennzeichnen von Gegenständen, insbesondere OP-Besteck oder OP-Gegenstände, das ein Trägermaterial mit einer Oberseite und einer Unterseite aufweist, wobei das Trägermaterial, das als Datenträger fungiert, zumindest auf der Oberseite bedruckbar oder bedruckt ist. Ferner weist das Etikett eine auf der Unterseite des Trägermaterials vorgesehene Klebstoffschicht sowie eine auf der Oberseite vorgesehene Klebstoffschicht auf. Zumindest die auf der Oberseite vorgesehene Klebstoffschicht weist einen Klebstoff auf oder besteht aus einem Klebstoff, der in einem nicht aktivierten Zustand vorliegt und durch einen Aktivierungsmechanismus aktivierbar ist.

Die auf der Unterseite und der Oberseite vorgesehenen Klebstoffe sind durch Aktivierung zumindest derart in ihrer Viskosität veränderbar, dass die über einen Außenumfang des Etiketts hinaustreten und miteinander derart in Kontakt kommen, dass die dazwischen liegende(n) Schicht(en) des Etiketts, insbesondere das Trägermaterial und ein darauf vorgesehenes Druckbild, durch die beiden Klebstoffschichten eingekapselt werden. Dabei erfolgt die Aktivierung üblicherweise beim Aufbringen des Etiketts auf einen zu kennzeichnenden Gegenstand, so dass einerseits das Etikett mit dem an der Unterseite vorgesehenen Klebstoff am Gegenstand angeklebt wird und im Rahmen der Aktivierung, die zum Ankleben des Etiketts am Gegenstand erforderlich ist, auch die auf der Oberseite vorgesehene Klebstoffschicht sich derart verflüssigt, dass sie über den Außenumfang bzw. die Außenkanten des Etiketts hinaus verläuft und mit der ebenfalls über die Außenkanten des Etiketts hinaustretenden Klebstoffschicht der Unterseite in Kontakt tritt und damit das Etikett im Wesentlichen vollständig am Gegenstand angebracht und versiegelt wird.

Die Aktivierung des Klebstoffs kann beispielsweise durch Strahlungsenergie, zum Beispiel Wärme-, Infrarot-, Ultraviolett-Strahlung oder andere elektromagnetische Strahlung, oder andere Mechanismen erfolgen. Geeignete Klebstoffe sind insbesondere vernetzende Klebstoffe, zum Beispiel auf Epoxidharzbasis, wodurch eine dauerhafte Verklebung realisierbar ist.

Vorzugsweise sind der auf der Unterseite und auf der Oberseite vorgesehene Klebstoff miteinander derart kompatibel, dass sie miteinander eine Verbindung eingehen. Insbesondere ist der auf der Unterseite und auf der Oberseite vorgesehene Klebstoff vom gleichen Typ, zum Beispiel der gleichen Klebstoffklasse oder vorzugsweise der gleiche Klebstoff. Vorzugsweise ist auch der auf der Unterseite vorgesehene Klebstoff aktivierbar.

Durch die beiden Klebstoffschichten wird gewährleistet, dass eine Versiegelung des Etiketts beim Anbringen an einen Gegenstand ermöglicht wird, durch die beispielsweise eine Delaminierung der einzelnen Schichten des Etiketts wirksam verhindert wird. Dies wird insbesondere durch die Versiegelung der Seitenränder des Etiketts erzielt, die durch die zusammengefügten bzw. zusammenlaufenden Klebstoffschichten der Ober- und Unterseite des Etiketts erfolgt.

Es ist insbesondere bevorzugt, dass der auf der Oberseite und vorzugsweise auch der auf der Unterseite vorgesehene Klebstoff durch Wärme, UV-Strahlung oder andere elektromagnetische Strahlung (oder andere Mechanismen) aktivierbar ist, so dass der Klebstoff aushärtet. Dies kann vorteilhafter Weise durch eine Polyreaktion, zum Beispiel eine Polyadditionsreaktion erfolgen.

Entsprechend einer bevorzugten Ausführungsform kann das Trägermaterial auf der Oberseite im Rahmen des Herstellungsverfahrens bereits bedruckt werden, beispielsweise mit einem Barcode, 2D-Code oder einer sonstigen Codierung. Dadurch kann das Etikett zum Beispiel als Datenträger verwendet werden. Alternativ dazu kann das Etikett auch später bedruckt werden, zum Beispiel durch den Anwender, wobei dann die auf der Oberseite des Trägermaterials vorgesehene Klebstoffschicht erst durch den Anwender aufgebracht wird, damit das Druckbild durch die obere Klebstoffschicht versiegelt werden kann.

Das Trägermaterial kann beispielsweise eine Folie sein und aus einem oder einer Kombination der folgenden Materialien bestehen: Polyethylenterephthalat (PET), Polyetheretherketon (PEEK), Polyetherimid (PEI), Polyimid (PI), Copolycarbonate (COC), Polyphenylensulfid (PPS), Sulfonpolymer und Polysulfon. PEEK hat beispielsweise Eigenschaften wie eine hohe Temperaturbeständigkeit und Beständigkeit gegenüber fast allen organischen und anorganischen Chemikalien. Ferner ist PEEK wiederholt sterilisierbar und biokompatibel, weshalb sich das Material auch für die Anwendung in der Medizintechnik eignet. Ähnliches gilt für PET, PEI, PI, COC, PPS und Sulfonpolymer.

Auf der Unter- und/oder Oberseite des Etiketts kann ein ablösbares Kaschiermaterial bzw. ein Liner (Abdeckfolie) vorgesehen sein. Dieser kann beispielsweise in Form einer PET-Folie oder eines Silikonpapiers bereitgestellt werden.

In einem weiteren Aspekt ist die Erfindung auf ein Bahnenmaterial gerichtet, das mehrere Etiketten, insbesondere Etiketten wie vorstehend beschrieben, aufweist. Die Etiketten sind mit einer auf ihrer Unterseite vorgesehenen Klebstoffschicht auf einer Kaschierbahn ablösbar und/oder abtrennbar angeordnet. Bevorzugt wird das Bahnenmaterial in Rollenform bereitgestellt.

Zur Herstellung des erfindungsgemäßen Bahnenmaterials kann ein Trägermaterial als Bahn vorgesehen werden, die auf der Unterseite und der Oberseite klebstoffbeschichtet ist, wobei die einzelnen Etiketten durch Abtrennstellen, beispielsweise Perforationen, vom Bahnenmaterial ablösbar und/oder abtrennbar sind. Beispielsweise sind die einzelnen Etiketten im Bahnenmaterial derart ausgestanzt, dass das Trägermaterial mit den Klebstoffbeschichtungen an der Ober- und Unterseite sowie dem auf der Oberseite vorgesehenen Aufdruck an einem Liner haftend vorgesehen ist, wobei der Liner vorzugsweise gleichzeitig als Handhabungshilfsmittel dient. Nach dem Aufkleben des Etiketts auf einem zu kennzeichnenden Gegenstand, kann der Liner dann vom Etikett, insbesondere der klebstoffbeschichteten Oberseite des Trägermaterials entfernt werden und anschließend durch Aktivierung des oder der Klebstoffe auf dem Gegenstand versiegelt werden.

Die vorliegende Erfindung betrifft ferner ein Verfahren zur Herstellung von Etiketten, insbesondere der vorstehend beschriebenen Etiketten, mit den Schritten: Bereitstellen einer (Daten-)Trägerbahn mit einer bedruckbaren Oberseite und einer Unterseite, wobei auf der Unterseite eine Klebstoffschicht vorgesehen ist oder wird; Bedrucken der Oberseite mit einer Kennzeichnung; Aufbringen einer Klebstoffschicht auf der bedruckten Oberseite der Trägerbahn; und Ausstanzen oder Ausschneiden einzelner Etiketten aus der Trägerbahn. Die auf der Unterseite und der Oberseite vorgesehenen Klebstoffe sind durch Aktivierung zumindest derart in ihrer Viskosität veränderbar, dass die über einen Außenumfang des Etiketts hinaustreten und miteinander derart in Kontakt kommen, dass die dazwischen liegende(n) Schicht(en) des Etiketts, insbesondere das Trägermaterial und ein darauf vorgesehenes Druckbild, durch die beiden Klebstoffschichten eingekapselt werden.

Vorzugsweise ist bei diesem Verfahren die auf der Unterseite der Trägerbahn angeordnete Klebstoffschicht mit einer Kaschierung versehen, wobei die Trägerbahn samt der klebstoffbeschichteten Unterseite und der Kaschierung bereitgestellt wird. Das Bereitstellen der Klebstoffschicht auf der Oberseite der Trägerbahn erfolgt vorzugsweise durch Zuführen einer Klebstoffschicht auf einer Kaschierung in Form einer Transferfolie bzw. -bahn, die dann auf der Oberseite der Trägerbahn auflaminiert wird. Die Kaschierung der Transferfolie wird nach dem Laminieren und vor dem Ausstanzen vorzugsweise entfernt. Das Verfahren weist ferner bevorzugt einen Schritt zum Zuführen einer Kaschierbahn auf der Klebstoffschicht auf der Oberseite der Trägerbahn auf.

Dieses Herstellungsverfahren dient zur Bereitstellung eines Bahnmaterials mit einer Vielzahl bedruckter Etiketten, die durch den Endverbraucher sofort verwendbar sind.

Alternativ dazu betrifft die vorliegende Erfindung auch ein Verfahren zur Herstellung von Etikettenrohlingen zum Kennzeichnen von Gegenständen, bei dem der Druck erst beim Anwender und nicht während der Herstellung aufgebracht wird. Dieses Verfahren weist insbesondere die Schritte auf: Bereitstellen einer Kaschierbahn; Vorsehen einer Klebstoffschicht auf der Kaschierbahn; Anordnen einer Trägerbahn mit einer bedruckbaren Oberseite und einer Unterseite auf der klebstoffbeschichteten Kaschierbahn; und Anordnen einer weiteren Kaschierbahn benachbart zur Trägerbahn auf der klebstoffbeschichteten Kaschierbahn. Vorzugsweise wird die Klebstoffschicht zusammen mit der Kaschierbahn bereitgestellt. Die auf der Unterseite und der Oberseite vorgesehenen Klebstoffe sind durch Aktivierung zumindest derart in ihrer Viskosität veränderbar, dass die über einen Außenumfang des Etiketts hinaustreten und miteinander derart in Kontakt kommen, dass die dazwischen liegende(n) Schicht(en) des Etiketts, insbesondere das Trägermaterial und ein darauf vorgesehenes Druckbild, durch die beiden Klebstoffschichten eingekapselt werden.

Bevorzugt werden auf der bedruckbaren Oberseite der Trägerbahn Druckfenster zum späteren Bedrucken durch den Anwender und an der weiteren Kaschierbahn korrespondierende Klebefenster vorgesehen werden, wobei die Druckfenster und/oder Klebefenster vorzugsweise ausgestanzt werden.

Es ist bevorzugt, zwischen den Druckfenstern und den Klebefenstern eine Faltlinie vorzusehen, so dass jeder Etikettenrohling ein Druckfenster und ein Klebefenster aufweist, die entlang der Faltlinie aufeinander faltbar sind, um die Klebstoffschicht des Klebefensters auf die bedruckbare Oberseite des Druckfensters miteinander in Ausrichtung bringbar zu machen.

Das Verfahren kann den weiteren Schritt des Perforierens zur Erzeugung (i) von Trennlinien zum Vereinzeln der Etikettenrohlinge, der (ii) Druckfenster, (iii) der Klebefenster und/oder der Faltlinie aufweisen.

Die im Rahmen der Erfindung beispielsweise als Trägermaterial verwendete Folie aus PET, PEEK, PEI, PI, CO, PPS und/oder Sulfonpolymer lässt sich trotz ihrer Oberflächenbeschaffenheit auf einfache Weise bedrucken. Hierfür eignen sich herkömmliche Druckverfahren, selbst das Bedrucken mit Hilfe eines Standardbürodruckers (z.B. Thermotransfer- oder Tintenstrahldrucker) ist möglich. Auf diese Weise lässt sich mit einfachen Hilfsmitteln, die in jedem Krankenhaus bzw. in jeder Arztpraxis zur Verfügung stehen, ein Etikett z.B. für OP-Besteck herstellen, in dem ein Trägermaterial mit der gewünschten Information bedruckt wird. Das Etikett lässt sich dann an Ort und Stelle an dem OP-Besteck bzw. dessen Einzelteilen anbringen, um entsprechende Hinweise für das Sortieren und Bereitstellen eines OP-Bestecks wie oben diskutiert vorzusehen. Alternativ dazu oder kombiniert damit können auch vorbedruckte Etiketten geliefert werden, die vor Ort auf das OP-Besteck aufgebracht werden.

Das Trägermaterial ist mit Informationen im weitesten Sinne bedruckt, vorzugsweise mit Schriftzeichen und/oder Symbolen und/oder einem Strichcode und/oder einem 2D-Code und/oder mit einer ähnlich gearteteten Symbologie oder Codierung. Die Information kann in bedruckten und unbedruckten Bereichen kodiert oder auch in Zeichen unterschiedlicher Farbe enthalten sein. Das Trägermaterial kann transparent, transluzent oder opak sein.

Das erfindungsgemäße Etikett ermöglicht es, dass das auf dem Trägermaterial vorgesehene Druckbild durch die bereitgestellten Klebeschichten vollständig geschützt ist und gleichzeitig eine Delaminierung der einzelnen Schichten des Etiketts durch die Versiegelung verhindert wird, die durch die beiden Klebstoffschichten im Rahmen ihrer Aktivierung und Aushärtung erzielt wird.

Nachfolgend werden bevorzugten Ausführungsformen der Erfindung anhand der Figuren beispielhaft beschrieben. Es zeigen:
- Figur 1: eine schematische Seitenansicht einer Ausführungsform eines erfindungsgemäßen Etiketts bevor es an einem Gegenstand angebracht ist;
- Figur 2: eine schematische Seitenansicht des Etiketts von Figur 1 nachdem es an einem Gegenstand angebracht ist;
- Figur 3: eine schematische Draufsicht auf einen Abschnitt eines erfindungsgemäßen Bahnenmaterials, das mehrere erfindungsgemäße Etiketten aufweist;
- Figur 4: eine schematische Draufsicht auf eine alternative Ausführungsform eines erfindungsgemäßen Bahnenmaterials mit einer alternativen Ausführungsform mehrerer erfindungsgemäßer Etiketten; und
- Figur 5: eine schematische Darstellung zur Erläuterung erfindungsgemäßer Herstellungsverfahren für Etiketten.

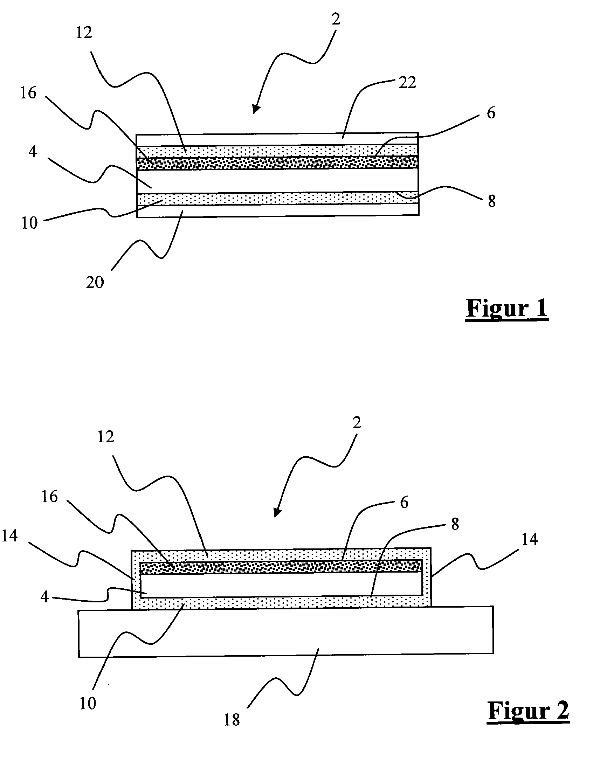

Die in Figur 1 gezeigte Ausführungsform eines erfindungsgemäßen Etiketts 2 ist insbesondere zum Kennzeichnen von Gegenständen, wie OP-Besteck, Werkzeuge oder Komponenten von Werkzeugmaschinen, hervorragend geeignet. Das erfindungsgemäße Etikett 2 weist ein Trägermaterial 4 mit einer Oberseite 6 und einer Unterseite 8 auf. Das Trägermaterial 4 ist zumindest auf der Oberseite 6 bedruckbar, um darauf eine für eine Kennzeichnung geeignete Information auf das Trägermaterial 4 aufdrucken zu können. Auf der Unterseite 6 des Trägermaterials 4 ist eine Klebstoffschicht 10 vorgesehen, und auf der gegenüberliegenden Oberseite 6 ist eine Klebstoffschicht 12 angeordnet. Die Klebstoffschicht 12 auf der Oberseite 6 der Trägerbahn 4 ist durch einen Klebstoff gebildet, der aktivierbar ist.

Vorzugsweise ist auch der auf der Unterseite 8 des Trägermaterials 4 vorgesehene Klebstoff, der die Klebstoffschicht 10 bildet, aktivierbar. Gemäß einer bevorzugten Ausführungsform sind die auf der Unterseite 8 und auf der Oberseite 6 vorgesehenen Klebstoffe der Klebstoffschichten 10, 12 derart miteinander kompatibel, dass sie miteinander eine Verbindung eingehen, nachdem der Klebstoff bzw. die Klebstoffe aktiviert wurde(n). Hierzu ist es bevorzugt, dass der auf der Unterseite 8 und auf der Oberseite 6 vorgesehene Klebstoff vom gleichen Typ ist. Besonders bevorzugt sind die auf der Unterseite 8 und der Oberseite 6 vorgesehenen Klebstoffe identisch.

Die auf der Unterseite 8 und der Oberseite 6 vorgesehenen Klebstoffe sind vorteilhafterweise durch Aktivierung derart beeinflussbar, dass sie ihr Fließverhalten bzw. ihre Viskosität verändern. Der Klebstoff wird entsprechend einer Ausführungsform der Erfindung durch Laminieren als Klebstoffschicht 10, 12 auf der Unter- bzw. Oberseite 8, 6 der Trägerbahn 4 aufgebracht. In der aufgebrachten Form ist der Klebstoff relativ zäh oder fest und weist damit eine hohe Viskosität auf. Durch Aktivierung, zum Beispiel beim oder nach dem Aufbringen des Etiketts 2 auf einen zu kennzeichnenden Gegenstand, wird die Viskosität durch Aktivierung herabgesetzt, so dass sich vorteilhafter Weise ein gewisses Fließverhalten in der Klebstoffschicht bzw. den Klebstoffschichten einstellt.

Die Viskosität durch die Aktivierung wird erfindungsgemäß vorteilhafterweise so eingestellt, dass zumindest die auf der Oberseite 6 vorgesehene Klebstoffschicht 12 über einen Außenumfang bzw. Außenkanten des Etiketts 2 hinaustritt und an den Seitenflächen Klebstoffbereiche 14 ausbildet, die die zwischen der oberen Klebstoffschicht 12 und der unteren Klebstoffschicht 10 vorgesehenen Schichten, nämlich das Trägermaterial 4 und ein darauf vorgesehenes Druckbild 16, einkapseln bzw. versiegeln. Dies ist in Figur 2 schematisch dargestellt. Dabei ist das erfindungsgemäße Etikett 2 auf einem Gegenstand 18 mithilfe der unteren Klebstoffschicht 10 angebracht. Ein derartig versiegeltes Etikett 2 ist gegenüber rauen Umgebungsbedingungen, wie sie beispielsweise bei einer Sterilisation von OP-Besteck auftreten, hervorragend geschützt und gewährleistet daher eine dauerhafte Kennzeichnung. Ferner bietet die Versiegelung einen effektiven Schutz gegen mechanische Beschädigungen, insbesondere Delaminierung.

Das Etikett 2 kann in seiner Konfiguration, in der es geliefert wird, d.h. vor der Anbringung an einen Gegenstand, auf der Klebstoffschicht 10 der Unterseite 8 und/oder auf der Klebstoffschicht 12 der Oberseite 6 ein ablösbares Kaschiermaterial 20 bzw. 22 aufweisen. Derartige Kaschiermaterialien dienen insbesondere des Schutzes und der einfacheren Handhabung des Etiketts 2. Geeignete Kaschiermaterialien sind beispielsweise Silikonpapier, PET-Liner oder weitere geeignete Materialien, die sich von den Klebstoffschichten 10, 12 leicht ablösen lassen. Insbesondere ist es bevorzugt, die untere Klebstoffschicht 10, die zur Anbringung an einen Gegenstand 18 vorgesehen ist, mittels eines Silikonpapiers abzudecken und die obere Klebstoffschicht 12, die nach der Anbringung an einen Gegenstand 18 Teil der Versiegelung ist, mit einem dehäsiven PET-Liner zu versehen.

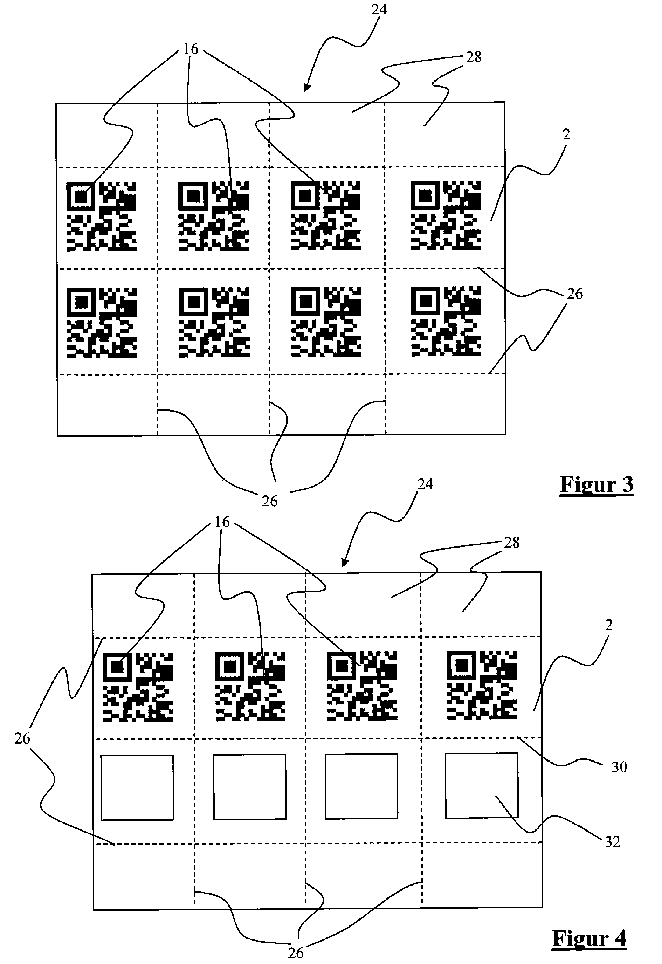

Die erfindungsgemäßen Etiketten 2 werden vorzugsweise in einem endlosen Fertigungsprozess als Bahnenmaterial 24 bereitgestellt, wobei das Trägermaterial 4 zunächst als Bahn vorgesehen ist, die auf der Unterseite und der Oberseite klebstoffbeschichtet ist, um die untere Klebstoffschicht 10 bzw. die obere Klebstoffschicht 12 zu bilden. Die einzelnen Etiketten 2 sind vom Bahnenmaterial 24 ablösbar und/oder abtrennbar. Dazu sind vorzugsweise beispielsweise Perforationen 26 im Bahnenmaterial 24 vorgesehen. Dies ist in Figur 3 schematisch dargestellt.

Bevorzugt wird das Bahnenmaterial mit einer Kaschierbahn bereitgestellt, wobei die Trägerbahn nach dem Ausstanzen einzelner Etiketten entfernt wird. Dadurch verbleiben die Etiketten mit ihrer auf der Unterseite des Trägers vorgesehenen Klebstoffschicht auf der Kaschierbahn.

In der in Figur 3 gezeigten Ausführungsform des erfindungsgemäßen Bahnenmaterials 24 ist darüber hinaus jedem Etikett 2 eine ablösbare Handhabungslasche 28 zugeordnet, mit der die Etiketten 2 jeweils einfach an einem zu etikettierenden Gegenstand 18 aufgebracht werden können. Nach dem Anordnen eines Etiketts 2 auf einen zu etikettierenden Gegenstand 18 kann die Handhabungslasche 28 dann beispielsweise entlang der Perforation 26 leicht abgetrennt werden. Im Anschluss daran kann die Aktivierung der oberen und/oder unteren Klebstoffschicht und damit die Versiegelung des Etiketts 2 erfolgen.
In Figur 4 ist eine weitere Ausführungsform eines erfindungsgemäßen Bahnenmaterials 24 mit erfindungsgemäßen Etiketten 2 dargestellt. Bei der in Figur 4 dargestellten Ausführungsform werden die Etiketten 2 nicht direkt bei der Herstellung bedruckt, sondern für die spätere Bedruckung beim Anwender vorbereitet. Hierzu weisen die auf dem Bahnenmaterial 24 vorgesehenen Etiketten 2 ebenfalls ein Trägermaterial 4 auf, das auf seiner Oberseite bedruckbar ist. In Figur 4 ist zur besseren Illustration hierzu bereits ein Druckbild 16 dargestellt, welches jedoch nicht bei der Herstellung des Bahnenmaterials aufgebracht wird, sondern wie vorstehend bereits erläutert beim Anwender. Die Druckbilder 16 der einzelnen Etiketten 2 sind im Bereich von Druckfenstern (nicht dargestellt) vorgesehen, wobei das Druckfenster auf den jeweiligen Etiketten auch die gesamte Oberseite des Trägermaterials 4 eines jeweiligen Etiketts einnehmen kann.

In dieser Ausführungsform des Etiketts bzw. des Bahnenmaterials 24 ist eine Faltlinie 30 in Längsrichtung der Bahn vorgesehen, anhand der ein erster Etikettbereich, der das Druckfenster aufweist, und ein zweiter Etikettbereich, der ein Klebefenster 32 aufweist, übereinander gefaltet werden können. Dadurch kann nachdem Bedrucken beim Anwender das Klebefenster 32, das wiederum auch die gesamte Fläche des zweiten Etikettbereichs einnehmen kann, auf dem ersten Etikettbereich zur Anlage gebracht, so dass eine Konfiguration eines Etiketts 2 entsteht, wie sie in Figur 1 dargestellt ist.

Das Klebefenster 32 dient dazu, die obere Klebstoffschicht 12 auf dem durch den Anwender bedruckten Trägermaterial 4 an der Oberseite 6 bereitzustellen, wie dies in Figur 1 gezeigt ist. Die Unterseite des Bahnenmaterials 24 gemäß Figuren 3 und 4 ist bereits mit der Klebstoffschicht 10 beschichtet. Die in Figur 4 dargestellten "Fenster", nämlich die Druckfenster und Klebefenster, dienen lediglich der Erklärung und sind nicht notwendigerweise konkret ausgebildete Bestandteile des Bahnenmaterials bzw. Etiketts. Mit anderen Worten ist ein aus dem Bahnenmaterial 24 der in Figur 4 gezeigten Ausführungsform abgelöstes Etikett 2 nach dem Aufbringen der oberen Klebstoffschicht 12 durch Falten entlang der Faltlinie 30 genauso konfiguriert, wie dies in Figur 1 veranschaulicht ist. Hierzu kann es vorteilhaft sein, im Bereich der Klebefenster 32, d.h. in der in Figur 4 gezeigten Darstellungsweise unterhalb der Faltlinie 30 auf dem Trägermaterial Mittel vorzusehen, die ein Ablösen des in den Klebefenstern vorgesehenen Klebstoffs, das die obere Klebstoffschicht 12 im Etikett bilden soll, vorzusehen. Diese Mittel können beispielsweise durch eine Kaschierung, wie vorstehend beschrieben, gebildet sein.

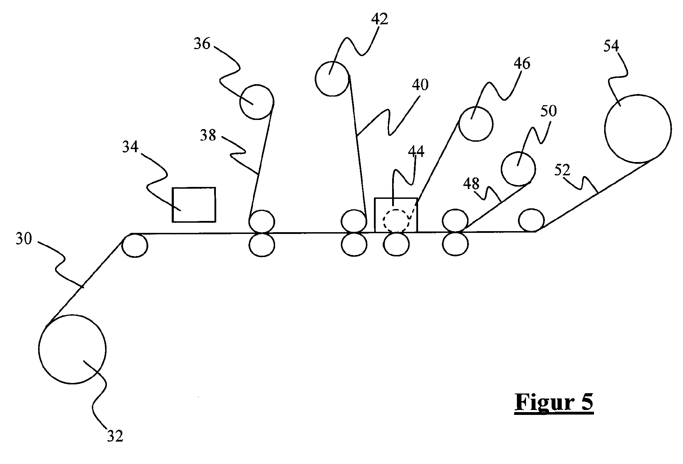

Nachfolgend wird im Zusammenhang mit Figur 5 eine bevorzugte Ausführungsform eines Herstellungsverfahrens für die erfindungsgemäßen Etikette 2 beschrieben. Das hier beschriebene Herstellungsverfahren ist ein kontinuierliches Verfahren, wobei Etiketten der vorliegenden Erfindung auch mit anderen Herstellungsverfahren, insbesondere nicht kontinuierlichen Verfahren herstellbar sind.

In der in Figur 5 schematisch dargestellten Fertigungsanlage wird zunächst eine Trägerbahn 30 von einer Rolle 32 zugeführt. Die Trägerbahn 30 ist in der hier dargestellten Ausführungsform auf ihrer Unterseite bereits mit einer Klebstoffschicht versehen. Diese könnte alternativ jedoch auch im Herstellungsverfahren auf die Trägerbahn aufgebracht werden. Ist die untere Klebstoffschicht auf der Trägerbahn 30 bereits bei Zuführung vorhanden, so kann beispielsweise eine Kaschierung auf der Unterseite der Trägerbahn 30 vorgesehen sein, so dass die Bahn 30 problemlos von der Rolle 32 abgewickelt werden kann. Die Kaschierung kann beispielsweise in Form eines separaten Kaschiermaterials, das als Bahn auf der unteren Klebstoffschicht aufgebracht ist, realisiert sein. Dieser Verbund aus Trägerbahn 30, unterer Klebstoffschicht und Kaschiermaterial wird der Fertigungsanlage in einer bevorzugten Ausführungsform, wie sie in Figur 5 gezeigt ist, zugeführt.

Die Trägerbahn 30 wird dann einer schematisch dargestellten Druckeinrichtung 34 zugeführt, die auf der Oberseite der Trägerbahn 30 ein Druckbild 16 vorsieht. In einer alternativen Ausführungsform erfolgt kein Bedrucken der Oberseite der Trägerbahn 30. Demnach ist die Druckeinrichtung 34 optional.

In der in Figur 5 gezeigten Ausführungsform, in der die Oberseite der Trägerbahn 30 bedruckt wird, wird nach dem Bedrucken die obere Klebstoffschicht auf der Trägerbahn auflaminiert. Hierzu wird von einer Vorratsrolle 36 ein auf einem Transferfilm 38 vorgesehener Klebstoff auf die Trägerbahn 30 auf deren Oberseite auflaminiert. Der Transferfilm 38 trägt den Klebstofffilm, der im fertigen Etikett die Klebstoffschicht 12 bildet. Der Klebstofffilm ist vorzugsweise auf einer Kaschierbahn 40 vorgesehen, die nach dem Laminieren abgezogen wird und beispielsweise auf einer Rolle 42 aufgewickelt wird. Zu diesem Zeitpunkt besteht das Laminat aus der Trägerbahn, dem Aufdruck, der oberen und unteren Klebstoffschicht sowie dem auf der unteren Klebstoffschicht vorgesehenen Kaschiermaterial.

Dieses Laminat wird im Anschluss einer Stanzeinrichtung 44 zugeführt, die beispielsweise als Rotationsstanze ausgebildet sein kann. Nachdem die Kaschierung 40 zu diesem Zeitpunkt bereits entfernt ist, wird in die offene bzw. freiliegende obere Klebstoffschicht gestanzt. Der Teil der Trägerbahn 30, der außerhalb der einzelnen Etiketten liegt, wird in der dargestellten Ausführungsform vom Laminat abgezogen und auf einer Rolle 46 aufgewickelt. In diesem Stadium werden die Etiketten 2 auf der Kaschierbahn der unteren Klebstoffschicht getragen, die ursprünglich mit der Trägerbahn 30 zugeführt wurde. Auf der Oberseite der Bahn kann im Anschluss optional eine obere Kaschierbahn 48 von einer Rolle 50 zugeführt werden. Abschließend wird das erfindungsgemäße Bahnenmaterial 52 mit den darauf vorgesehenen Etiketten 2 zu einer Rolle 54 zur weiteren Verwendung aufgewickelt.

Zur Herstellung der in Figur 4 gezeigten Ausführungsform des erfindungsgemäßen Bahnenmaterials 24 erfolgt während der Herstellung kein Bedrucken. In Abwandlung zu der vorstehend beschriebenen Herstellungsweise wird bei dieser Ausführungsform die obere Klebstoffschicht durch vorzugsweise nicht durch einen Transferfilm 38 aufgebracht. Vielmehr ist es bevorzugt, die untere Klebstoffschicht auf einer Kaschierbahn bereitzustellen, die breiter ist, als die Trägerbahn, zum Beispiel etwa doppelt so breit. Der Aufbau des anfänglichen Bahnenmaterials weist demnach zunächst eine untere Kaschierbahn mit einer darauf vorgesehenen Klebstoffschicht auf, wobei die Klebstoffschicht etwa von einem Rand der Bahn bis zur Bahnmitte bzw. einer später vorzusehenden Faltlinie 30 eine Trägerbahn aufweist. Auf der anderen Seite der Faltlinie zum gegenüberliegenden Rand des Bahnenmaterials ist eine obere Kaschierbahn vorgesehen. In dieser Konfiguration werden gegebenenfalls Perforationen im Bahnenmaterial vorgesehen, um beispielsweise die Druck- und/oder Klebefenster auszubilden, einzelne Etiketten voneinander abtrennbar zu machen und/oder die Faltlinie zu bilden. Das Bahnenmaterial wird dann vorzugsweise als Rolle gewickelt. Bein Anwender kann die Rolle abgewickelt, bedruckt und mit der oberen Klebstoffschicht versehen werden, bevor die Etiketten an einem zu etikettierenden Gegenstand angebracht werden.

Mit dem erfindungsgemäßen Etikett, Bahnenmaterial und Herstellungsverfahren lassen sich erhebliche Vorteile erzielen, insbesondere wird dadurch ermöglicht, Etiketten dauerhaft an Gegenständen zu befestigen, die extremen Beanspruchungen oder rigorosen Umgebungsbedingungen ausgesetzt sind. Damit eröffnet sich ein völlig neues Gebiet an Anwendungsmöglichkeiten für Klebeetiketten.

## Patentansprüche

1. Etikett (2) zum Kennzeichnen von Gegenständen (18), das aufweist:
ein Trägermaterial (4) mit einer Oberseite (6) und einer Unterseite (8), wobei das Trägermaterial (4) zumindest auf der Oberseite (6) bedruckbar ist;
eine auf der Unterseite (8) vorgesehene Klebstoffschicht (10); und
eine auf der Oberseite (6) vorgesehene Klebstoffschicht (12), die aktivierbar ist,
wobei die auf der Unterseite (8) und der Oberseite (6) vorgesehenen Klebstoffe durch Aktivierung zumindest derart in ihrer Viskosität beeinflussbar sind, dass sie über einen Außenumfang des Etiketts (2) hinaustreten und miteinander derart in Kontakt treten, dass die dazwischen liegenden Schichten (4, 16), eingekapselt sind.

2. Etikett nach Anspruch 1, wobei der auf der Unterseite (8) und auf der Oberseite (6) vorgesehene Klebstoff miteinander derart kompatibel sind, dass sie miteinander eine Verbindung eingehen.

3. Etikett nach Anspruch 1 oder 2, wobei der auf der Unterseite (8) und auf der Oberseite (6) vorgesehene Klebstoff vom gleichen Typ ist, vorzugsweise die gleichen Klebstoffe vorgesehen sind.

4. Etikett nach einem der Ansprüche 1 bis 3, wobei der auf der Unterseite (8) vorgesehene Klebstoff aktivierbar ist.

5. Etikett nach einem der Ansprüche 1 bis 4, wobei der auf der Oberseite (6) und vorzugsweise der auf der Unterseite (8) vorgesehene Klebstoff durch Wärme aktivierbar sind und dadurch aushärten.

6. Etikett nach einem der Ansprüche 1 bis 5, wobei das Trägermaterial (4) auf der Oberseite (6) bedruckt ist, vorzugsweise mit einem Barcode, 2D-Code oder einer sonstigen Codierung.

7. Etikett nach einem der Ansprüche 1 bis 6, wobei das Trägermaterial (4) eine Folie, insbesondere eine Folie aus einem oder einer Kombination der folgenden Materialien ist: Polyethylenterephthalat (PET), Polyetheretherketon (PEEK), Polyetherimid (PEI), Polyimid (PI), Copolycarbonate (COC), Polyphenylensulfid (PPS), Sulfonpolymer, Polysulfon.

8. Etikett nach einem der Ansprüche 1 bis 7, wobei auf der Klebstoffschicht (10) der Unterseite (8) und/oder auf der Klebstoffschicht (12) der Oberseite (6) ein ablösbares Kaschiermaterial (20, 22) vorgesehen ist.

9. Bahnenmaterial mit mehreren der Etiketten nach einem der Ansprüche 1 bis 8, wobei die Etiketten (2) mit der auf der Unterseite (8) vorgesehenen Klebstoffschicht (10) auf einer Kaschierbahn ablösbar und/oder abtrennbar angeordnet sind.

10. Verwendung des Etiketts (2) nach einem der Ansprüche 1 bis 9 zur individualisierten Kennzeichnung von OP-Besteck.

11. Verfahren zur Herstellung von Etiketten (2) zum Kennzeichnen von Gegenständen gemäß Anspruch 1, mit den Schritten:
a) Bereitstellen einer Trägerbahn mit einer bedruckbaren Oberseite und einer Unterseite, wobei auf der Unterseite eine Klebstoffschicht vorgesehen ist oder wird;
b) Bedrucken der Oberseite mit einer Kennzeichnung;
c) Aufbringen einer Klebstoffschicht auf der bedruckten Oberseite der Trägerbahn; und
d) Ausstanzen einzelner Etiketten aus der Trägerbahn,
wobei die auf der Unterseite (8) und der Oberseite (6) vorgesehenen Klebstoffe durch Aktivierung zumindest derart in ihrer Viskosität beeinflussbar sind, dass sie über einen Außenumfang des Etiketts (2) hinaustreten und miteinander derart in Kontakt treten, dass die dazwischen liegenden Schichten (4, 16), eingekapselt sind.

12. Verfahren nach Anspruch 11, wobei die Klebstoffschicht auf der Unterseite der Trägerbahn in Schritt a) zugeführt wird, vorzugsweise in Form einer Transferbahn, die die Klebstoffschicht auf einer Kaschierbahn aufweist.

13. Verfahren nach Anspruch 11 oder 12, wobei das Aufbringen der Klebstoffschicht in Schritt c) durch Zuführen einer Transferbahn erfolgt, die die Klebstoffschicht auf einer Kaschierbahn aufweist, wobei die Klebstoffschicht auf der Oberseite der Trägerbahn auflaminiert wird, wobei die Kaschierbahn der Transferbahn nach dem Laminieren und vor Schritt d) entfernt wird.

14. Verfahren nach einem der Ansprüche 11 bis 13, wobei nach Schritt d) in einem weiteren Schritt e) eine Kaschierbahn auf der Klebstoffschicht auf der Oberseite aufgebracht wird.

15. Verfahren zur Herstellung von Rohlingen (2) für Etiketten zum Kennzeichnen von Gegenständen gemäß Anspruch 1, mit den Schritten:
a) Bereitstellen einer Kaschierbahn;
b) Vorsehen einer Klebstoffschicht auf der Kaschierbahn;
c) Anordnen einer Trägerbahn mit einer bedruckbaren Oberseite und einer Unterseite auf der klebstoffbeschichteten Kaschierbahn; und
d) Anordnen einer weiteren Kaschierbahn benachbart zur Trägerbahn auf der klebstoffbeschichteten Kaschierbahn,
wobei die auf der Unterseite (8) und der Oberseite (6) vorgesehenen Klebstoffe durch Aktivierung zumindest derart in ihrer Viskosität beeinflussbar sind, dass sie über einen Außenumfang des Etiketts (2) hinaustreten und miteinander derart in Kontakt treten, dass die dazwischen liegenden Schichten (4, 16), eingekapselt sind.

16. Verfahren nach Anspruch 15, wobei auf der bedruckbaren Oberseite der Trägerbahn Druckfenster zum späteren Bedrucken und an der weiteren Kaschierbahn korrespondierende Klebefenster vorgesehen werden, wobei die Druckfenster und/oder Klebefenster vorzugsweise ausgestanzt werden.

17. Verfahren nach Anspruch 15 oder 16, wobei zwischen den Druckfenstern und den Klebefenstern eine Faltlinie vorgesehen wird, so dass jeder Etikettenrohling ein Druckfenster und ein Klebefenster aufweist, die entlang der Faltlinie aufeinander faltbar sind, um die Klebstoffschicht des Klebefensters und die bedruckbare Oberseite des Druckfensters miteinander in Ausrichtung bringbar zu machen.

18. Verfahren nach einem der Ansprüche 15 bis 17, wobei die Klebstoffschicht zusammen mit der Kaschierbahn bereitgestellt wird.

19. Verfahren nach einem der Ansprüche 15 bis 18, mit dem weiteren Schritt des Perforierens zur Erzeugung (i) von Trennlinien zum Vereinzeln der Etikettenrohlinge, (ii) der Druckfenster, (iii) der Klebefenster und/oder der Faltlinie.

## Claims

1. A label (2) for marking items (18) comprising:
a carrier material (4) with a top side (6) and a bottom side (8), wherein the carrier material (4) is printable at least on the top side (6);
an adhesive layer (10) provided on the bottom side (8); and
an adhesive layer (12) provided on the top side (6), which can be activated,
wherein the adhesives provided on the bottom side (8) and the top side (6) can be influenced in their viscosity by activation at least in such a way that they flow beyond an outer circumference of the label (2) and come into contact with each other in a way that the layers (4, 16) in between are encapsulated.

2. The label according to claim 1, wherein the adhesives on the bottom side (8) and the top side (6) are compatible with each other in a way that they connect to each other.

3. The label according to claim 1 or 2, wherein the adhesives provided on the bottom side (8) and on the top side (6) are of the same type, preferably the same adhesives are provided.

4. The label according to any one of claims 1 to 3, wherein the adhesive provided on the bottom side (8) can be activated.

5. The label according to any one of claims 1 to 4 wherein the adhesive provided on the top side (6) and preferably the adhesive provided on the bottom side (8) can be activated by heat and thus cure.

6. The label according to any one of claims 1 to 5, wherein the carrier material (4) is printed on the top side (6), preferably with a bar code, 2D code or any other coding.

7. The label according to any one of claims 1 to 6, wherein the carrier material (4) is a film, in particular a film consisting of one or a combination of the following materials: polyethylene terephthalate (PET), polyetheretherketone (PEEK), polyetherimide (PEI), polyimide (PI), copolycarbonates (COC), polyphenylene sulfide (PPS), sulfone polymer and polysulfone.

8. The label according to any one of claims 1 to 7, wherein a removable liner material (20, 22) is provided on the adhesive layer (10) of the bottom side (8) and/or on the adhesive layer (12) of the top side (6).

9. A sheet material with a plurality of the labels according to any one of claims 1 to 8, wherein the labels (2) are arranged with the adhesive layer (10) provided on the bottom side (8) on a liner in a removable and/or separable way.

10. Use of the label (2) according to any one of claims 1 to 9 for individualized marking of surgical instruments.

11. A method for manufacturing labels (2) for marking items according to claim 1, comprising the steps of:
(a) providing a carrier sheet with a printable top side and a bottom side, wherein on the bottom side an adhesive layer is provided;
(b) printing the top side with a marking;
(c) applying an adhesive layer on the printed top side of the carrier sheet; and
(d) punching out individual labels of the carrier sheet,
wherein the adhesives provided on the bottom side (8) and the top side (6) can be influenced in their viscosity by activation at least in such a way that they flow beyond an outer circumference of the label (2) and come into contact with each other in a way that the layers (4, 16) in between are encapsulated.

12. The method according to claim 11, wherein the adhesive layer on the bottom side of the carrier sheet is introduced in step (a), preferably in the form of a transfer sheet comprising the adhesive layer on a liner sheet.

13. The method according to claim 11 or 12, wherein the application of the adhesive layer in step (c) is performed by supplying a transfer sheet comprising the adhesive layer on a liner, wherein the adhesive layer is laminated to the top side of the carrier sheet, wherein the liner of the transfer sheet is removed after lamination and before step (d).

14. The method according to any one of claims 11 to 13, wherein after step (d) in a further step (e) a liner is applied to the adhesive layer on the top side.

15. A method of manufacturing blanks (2) for labels for marking items according to claim 1, comprising the steps of:
(a) providing a liner;
(b) providing an adhesive layer on the liner;
(c) arranging a carrier sheet with a printable top side and a bottom side on the adhesive-coated liner; and
(d) arranging a further liner adjacent to the carrier sheet on the adhesive-coated liner,
wherein the adhesives provided on the bottom side (8) and the top side (6) can be influenced in their viscosity by activation at least in such a way that they flow beyond an outer circumference of the label (2) and come into contact with each other in a way that the layers (4, 16) in between are encapsulated.

16. The method according to claim 15, wherein print windows for later printing are provided on the printable top side of the carrier sheet and on the further liner corresponding adhesion windows are provided, wherein the print windows and/or adhesion windows are preferably punched out.

17. The method according to claim 15 or 16, wherein between the print windows and the adhesion windows a fold line is provided so that each label blank comprises a print window and an adhesion window which are foldable onto each other along the fold line in order to render the adhesive layer of the adhesion window alignable with the printable top side of the print window.

18. The method according to any one of claims 15 to 17, wherein the adhesive layer is provided together with the liner.

19. The method according to any one of claims 15 to 18, comprising the further step of perforating to produce (i) separation lines for separating the label blanks, (ii) the print windows, (iii) the adhesion windows and/or the fold line.

## Revendications

1. Etiquette (2) pour l'identification d'objets (18), comprenant :
un matériau support (4) ayant une face supérieure (6) et une face inférieure (8), le matériau support (4) étant imprimable au moins sur la face supérieure (6) ;
une couche d'adhésif (10) fournie sur la face inférieure (8) ; et
une couche d'adhésif (12) fournie sur la face supérieure (6), laquelle peut être activée, où les adhésifs fournis sur la face inférieure (8) et la face supérieure (6) peuvent être influencés au moins quant à leur viscosité par activation, de manière à dépasser d'un contour extérieure de l'étiquette (2) et à entrer en contact l'un avec l'autre pour enrober les couches (4, 16) intercalées.

2. Etiquette selon la revendication 1, où les adhésifs fournis sur la face inférieure (8) et sur la face supérieure (6) sont compatibles entre eux de manière à se lier l'un à l'autre.

3. Etiquette selon la revendication 1 ou la revendication 2, où les adhésifs fournis sur la face inférieure (8) et sur la face supérieure (6) sont de même type, des adhésifs identiques étant préférentiellement fournis.

4. Etiquette selon l'une des revendications 1 à 3, où l'adhésif fourni sur la face inférieure (8) est activable.

5. Etiquette selon l'une des revendications 1 à 4, où l'adhésif fourni sur la face supérieure (6) et préférentiellement l'adhésif fourni sur la face inférieure (8) sont activables sous l'effet de la chaleur et sont ainsi durcis.

6. Etiquette selon l'une des revendications 1 à 5, où le matériau support (4) est imprimé sur la face supérieure (6), préférentiellement avec un code-barres, un code 2D ou tout autre code.

7. Etiquette selon l'une des revendications 1 à 6, où le matériau support (4) consiste en une feuille, en particulier une feuille d'un des matériaux suivants ou d'une combinaison de ceux-ci : polytéréphtalate d'éthylène (PET), polyétheréthercétone (PEEK), polyétherimide (PEI), polyimide (PI), copolycarbonate (COC), sulfure de polyphénylène (PPS), polymère sulfone, polysulfone.

8. Etiquette selon l'une des revendications 1 à 7, où un matériau de laminage (20, 22) amovible est fourni sur la couche d'adhésif (10) de la face inférieure (8) et/ou sur la couche d'adhésif (12) de la face supérieure (6).

9. Matériau en bande avec plusieurs des étiquettes selon l'une des revendications 1 à 8, où les étiquettes (2) sont disposées de manière détachable et/ou séparable sur une bande de laminage avec la couche d'adhésif (10) fournie sur la face inférieure (8).

10. Utilisation de l'étiquette (2) selon l'une des revendications 1 à 9 pour l'identification individuelle d'instruments chirurgicaux.

11. Procédé de fabrication d'étiquettes (2) pour l'identification d'objets selon la revendication 1, comprenant les étapes suivantes :
a) fourniture d'une bande support avec une face supérieure imprimable et une face inférieure, une couche d'adhésif étant fournie sur la face inférieure;
b) impression de la face supérieure avec une identification ;
c) application d'une couche d'adhésif sur la face supérieure imprimée de la bande support ; et
d) découpe d'étiquettes individuelles dans la bande support,
les adhésifs fournis sur la face inférieure (8) et la face supérieure (6) pouvant être influencés au moins quant à leur viscosité par activation, de manière à dépasser d'un contour extérieure de l'étiquette (2) et à entrer en contact l'un avec l'autre pour enrober les couches (4, 16) intercalées.

12. Procédé selon la revendication 11, où la couche d'adhésif sur la face inférieure de la bande support est amenée lors de l'étape a), préférentiellement sous la forme d'une bande de transfert présentant la couche d'adhésif sur une bande de laminage.

13. Procédé selon la revendication 11 ou la revendication 12, où l'application de la couche d'adhésif lors de l'étape c) est effectuée par amenée d'une bande de transfert présentant la couche d'adhésif sur une bande de laminage, la couche d'adhésif étant laminée sur la face supérieure de la bande support, la bande de laminage de la bande de transfert étant retirée après laminage et avant l'étape d).

14. Procédé selon l'une des revendications 11 à 13, où lors d'une autre étape e) après l'étape d), une bande de laminage est appliquée sur la couche d'adhésif sur la face supérieure.

15. Procédé de fabrication d'ébauches (2) pour des étiquettes pour l'identification d'objets selon la revendication 1, comprenant les étapes suivantes :
a) fourniture d'une bande de laminage ;
b) fourniture d'une couche d'adhésif sur la bande de laminage ;
c) disposition d'une bande support avec une face supérieure imprimable et une face inférieure sur la bande de laminage revêtue d'adhésif ; et
d) disposition d'une autre bande de laminage, contiguë à la bande support sur la bande de laminage revêtue d'adhésif,
où les adhésifs fournis sur la face inférieure (8) et la face supérieure (6) peuvent être influencés au moins quant à leur viscosité par activation, de manière à dépasser d'un contour extérieure de l'étiquette (2) et à entrer en contact l'un avec l'autre pour enrober les couches (4, 16) intercalées.

16. Procédé selon la revendication 15, où des fenêtres d'impression pour l'impression ultérieure sont fournies sur la face supérieure imprimable de la bande support et des fenêtres de collage correspondantes sur l'autre bande de laminage, les fenêtres d'impression et/ou les fenêtres de collage étant préférentiellement découpées à l'emporte-pièce.

17. Procédé selon la revendication 15 ou la revendication 16, où une ligne de pliage est fournie entre les fenêtres d'impression et les fenêtres de collage, si bien que chaque ébauche d'étiquette présente une fenêtre d'impression et une fenêtre de collage repliables l'une sur l'autre le long de la ligne de pliage pour rendre alignable la couche d'adhésif de la fenêtre de collage et la face supérieure imprimable de la fenêtre d'impression.

18. Procédé selon l'une des revendications 15 à 17, où la couche d'adhésif est fournie avec la bande de laminage.

19. Procédé selon l'une des revendications 15 à 18, comprenant l'autre étape de perforation pour obtenir (i) des lignes de séparation pour la séparation des ébauches d'étiquettes, (ii) des fenêtres d'impression, (iii) des fenêtres de collage et/ou de la ligne de pliage.
